# NOUVEAU FASCICULE DE BREVET EUROPEEN

(11) **EP 0 626 931 B2**
(45) Date de publication et mention de la décision concernant l'opposition: **03.04.2002**
(45) Mention de la délivrance du brevet: 30.07.1997
(21) Numéro de dépôt: 93905381.5
(22) Date de dépôt: 10.02.1993
(51) Int. Cl.: C02F 1/04, B01D 1/22, B01D 1/28, B01D 1/24, B01D 19/02, F26B 17/28, F26B 23/00, B01D 19/00

(54) **PROCEDE, MACHINE ET INSTALLATION D'EXTRACTION PAR EVAPORATION DES RESIDUS SOLIDES D'UNE MATIERE FLUIDE**
VERFAHREN, VORRICHTUNG UND ANLAGE ZUR EXTRAKTION, DURCH VERDAMPFUNG EINES FESTEN RÜCKSTANDES AUS EINEM FLIESSFÄHIGEN MATERIAL
PROCESS, MACHINE AND PLANT FOR EXTRACTION BY EVAPORATION OF THE SOLID RESIDUES OF A FLUID SUBSTANCE

(30) Priorité: 12.02.1992 FR 9201732
(43) Date de publication de la demande: 07.12.1994
(73) Titulaire: SIRVEN, F-29260 Ploudaniel (FR)
(72) Inventeur: BOURDEL, Jacques, F-38410 Saint-Martin-d'Uriage (FR)
(74) Mandataire: Le Faou, Daniel
(86) Numéro de dépôt international: FR9300137
(87) Numéro de publication internationale: WO9316005

(56) Documents cités:
- WO-A-83/00547
- DE-A- 3 043 166
- DE-A- 3 119 985
- DE-C- 3 615 873
- FR-A- 2 457 839

## Description

La présente invention concerne un procédé d'extraction des résidus solides se trouvant en suspension ou en solution dans une matière fluide contenant des substances volatiles, notamment d'une matière aqueuse. Elle concerne également une machine qui sert à la mise en oeuvre de ce procédé, ainsi qu'une installation de traitement équipée d'une telle machine.

Par l'expression "matière aqueuse" on désigne une matière contenant essentiellement de l'eau, et par le terme "fluide", on désigne un produit ayant la consistance d'un liquide, d'une boue, d'une pâte, de poudre ou granulés, susceptible de s'écouler et de s'étaler facilement.

Dans de nombreux domaines de l'agriculture et de l'industrie se pose le problème de traiter des matières fluides aqueuses de manière à en séparer les éléments solides qui s'y trouvent sous forme de solution ou sous forme de particules en suspension, afin de les séparer de l'eau, et le cas échéant des autres liquides présents dans l'eau, cette eau étant ensuite rejetée dans la nature. Les difficultés rencontrées pour résoudre cet objectif sont liées principalement au coût du traitement et à la nécessité de rejeter dans la nature des liquides et des gaz non polluants.

Ce problème est rencontré notamment pour le traitement des lisiers d'élevage pour lesquels il est nécessaire de mettre en oeuvre une dépense énergétique très faible.

Il se rencontre également, par exemple, dans la déshydratation des boues liquides des stations d'épuration, qu'elle soit urbaine ou industrielle, pour la déshydratation de certains sous-produits, par exemple fournis par les abattoirs, qui peuvent entrer dans l'alimentation animale, et pour des matières variées de l'industrie agro-alimentaire.

Une technique bien connue permettant de séparer efficacement les constituants solides et liquides d'une suspension ou d'une solution est celle de l'évaporation (ou distillation). Cette technique permet en effet d'obtenir une extraction complète des résidus solides.

Toutefois, pour évaporer le liquide selon les procédés connus, un apport considérable de chaleur est nécessaire, si bien que cette technique est peu économique.

C'est le cas par exemple du procédé de traitement de lisier décrit dans DE-C-3 615 873, selon lequel le lisier à traiter est contenu dans une cuve et chauffé électriquement. Cette technique permet de concentrer le lisier, mais non d'en extraire les résidus solides sous forme d'un produit sec (poudre).

DE-A-3 043 166 décrit un sécheur sous vide qui comprend un certain nombre de disques creux et parallèles, verticaux, tournant dans une enceinte. La matière fluide à déshydrater est projetée par des rampes d'arrosage contre les deux faces des disques et raclée. après séchage, pour retomber au fond de la cuve. Dans cet appareil, qui travaille sous vide, les vapeurs produites par l'évaporation sont aspirées et évacuées hors de l'enceinte. Un agent de chauffage provenant d'une source de chaleur extérieure est introduite dans les disques pour les chauffer (et réaliser l'évaporation). Cette technique connue n'est donc pas plus satisfaisante non plus sur le plan économique.

C'est pourquoi, l'objectif de l'invention a été de recourir à la technique de l'évaporation à l'aide d'un agencement particulier permettant de réduire considérablement la quantité d'énergie mise en oeuvre.

L'état de la technique en la matière peut être illustré par les documents WO-A-83 00547 et FR-A-2 457 839.

WO-A-83 00547 concerne le séchage d'une matière humide, notamment de végétaux, qui consiste à faire avancer la matière à sécher sur des éléments de chauffe, par exemple au moyen de vis de transport. On récupère la vapeur qui est dégagée par la matière humide chauffée, et on la recomprime à l'aide d'un motocompresseur. C'est cette vapeur recomprimée qui fournit le fluide caloporteur alimentant les éléments de chauffe.

Ce document divulgue le principe d'un sécheur pour produits pelletables, et non pas pour des matières fluides contenant des résidus solides en suspension telles que des lisiers. Une telle machine n'est pas adaptée au traitement d'une matière fluide, le contact thermique entre la matière humide et les éléments de chauffe étant très mauvais, voire inexistant. L'épaisseur de la matière humide et sa mauvaise conductibilité thermique font qu'il n'est pas possible d'obtenir un produit sec à la sortie. Enfin, il est utopique de vouloir recomprimer dans les éléments de chauffe la vapeur produite par le séchage de la matière humide non dégagée, compte-tenu de la présence des incondensables.

FR-A-2 457 839 décrit un appareil de distillation d'eaux polluées, utilisant également le principe de recompression de la vapeur produite par évaporation. Les eaux à traiter arrosent un faisceau de tubes plats à l'intérieur desquels est introduite la vapeur recomprimée, qu'y s'y condense, fournissant ainsi les calories nécessaires à l'évaporation. Cette technique n'est pas applicable à ces matières fluides contenant un taux élevé de résidus solides en suspension, et notamment aux lisiers, car l'arrosage des tubes et la descente du produit par gravité le long de ceux-ci se fait de manière très irrégulière. Les résidus solides restent adhérer aux tubes, empêchant très rapidement les transferts thermiques nécessaires à l'évaporation des matières.

Les différents inconvénients des techniques connues sont éliminés dans le procédé selon l'invention grâce au fait qu'on épand la matière en continu, et sous la forme d'une couche mince et régulière, dont l'épaisseur est comprise entre 0,2 et 2 millimètres, sur l'une des faces - dite "première face" - des deux faces d'une paroi d'échange thermique, cette dernière étant chauffée à une température suffisante pour réaliser l'évaporation rapide de l'eau et/ou des constituants volatils de la matière, qu'on écrase la couche de matière contre cette première face pour la niveler et favoriser son émiettement et son étalement, qu'on enlève en continu les résidus solides et secs au fur et à mesure qu'ils se forment sur ladite première face, par raclage de cette dernière, et qu'on chauffe ladite paroi d'échange thermique au moyen de la vapeur résultant de l'évaporation, après que cette vapeur ait été comprimée mécaniquement, puis mise en contact avec l'autre face - dite "seconde face" - de la paroi d'échange thermique, de telle manière qu'elle s'y condense, puis qu'on évacue le condensat liquide et chaud, par un traitement physico-chimique, les substances incondensables étant éliminées avant recompression de la vapeur.

On comprend que, grâce à cet agencement, la quantité de chaleur qui se dégage sur la seconde face au moment de la condensation (phénomène exothermique) de la vapeur est transmise par conduction à travers la paroi d'échange thermique à l'autre face (la première face). Cette quantité de chaleur va alors servir à évaporer un volume équivalent de liquide se trouvant dans la couche de matière à traiter, en contact avec cette première face (phénomène endothermique).

Ainsi, la chaleur émise par la condensation est récupérée pour l'évaporation, ce qui permet de travailler avec un faible apport d'énergie correspondant à peu près à l'énergie mécanique requise pour comprimer la vapeur.

On comprend par ailleurs, pour que cet échange puisse se faire intégralement ou presque, qu'il est nécessaire que la paroi d'échange thermique soit très bonne conductrice de la chaleur et que la matière fluide à traiter soit étalée sous la forme d'une couche très mince, de manière à ce que chaque particule de matière solide se trouve en contact, ou pratiquement en contact, avec la première face - face d'évaporation - de la paroi d'échange thermique.

Ce transfert de chaleur latente devient possible, de part et d'autre de la paroi, si la pression de condensation est légèrement supérieure à la pression d'évaporation.

A titre indicatif, la seule énergie à fournir, qui est celle de la compression mécanique, est de 20 à 60 fois plus petite que l'énergie qui serait nécessaire pour réaliser l'évaporation selon un procédé traditionnel.

Pour limiter encore l'apport d'énergie nécessaire, il est particulièrement avantageux de réchauffer la matière à traiter au moyen du condensat chaud obtenu. Les pertes de chaleur sont alors très réduites.

A titre indicatif, et dans le cas où on a affaire à du lisier d'élevage, par exemple du lisier porcin, on travaille à une pression de I bar environ et à une température de l'ordre de 100°C du côté de la première face (côté évaporation) et à une pression de 1,4 bar environ et une température de l'ordre de 110°C du côté de la seconde face (face de condensation).

Dans le cas d'un lisier, il est également avantageux, voire nécessaire, de soumettre le lisier à un démoussage et/ou à un dégazage avant son épandage sur la paroi d'échange thermique.

La machine selon l'invention, qui sert à la mise en oeuvre de ce procédé, comprend :
- une paroi d'échange thermique séparant l'une de l'autre deux enceintes, l'une d'elles - dite "d'évaporation" - étant située du côté de la première face tandis que l'autre - dite "de condensation" - est située du côté de la seconde face ;
- un dispositif d'épandage de la matière à traiter sous la forme d'une couche mince sur ladite première face ;
- des moyens écraseurs aptes à favoriser l'émiettement et l'étalement de la couche de matière sur cette première face ;
- des moyens aptes à prélever la vapeur produite dans l'enceinte d'évaporation, en éliminer les produits incondensables par un traitement physico-chimique, l'épurer, la comprimer, et introduire la vapeur comprimée dans l'enceinte de condensation ;
- des moyens servant à récupérer les résidus solides et secs se formant sur ladite première face ;
- des moyens d'évacuation du condensat liquide se formant dans l'enceinte de condensation ;
- des moyens qui permettent d'extraire périodiquement de l'enceinte de condensation les gaz résiduels incondensables.

Dans un mode de réalisation particulièrement intéressant, ladite paroi d'échange thermique est mobile et décrit un mouvement cyclique à trajectoire fermée, la matière à traiter étant déposée sur cette paroi en début de cycle, tandis que les résidus solides sont retirés en fin de cycle.

De préférence, il est prévu une série de parois mobiles identiques entraînées en synchronisme, ce qui multiplie les capacités de traitement de la machine.

Dans ce cas, la machine comporte avantageusement une série de pompes volumétriques aptes à distribuer chacune la matière à épandre sur l'une des parois mobiles. A chaque paroi mobile est par conséquent associée une pompe volumétrique distributrice de la matière.

Dans un mode de réalisation préférentiel, la paroi d'échange thermique est l'une des parois d'un disque creux qui tourne autour de son axe et dont l'espace intérieur constitue l'enceinte de condensation, tandis que l'espace extérieur au disque constitue l'enceinte d'évaporation.

Un cycle correspondant donc à un tour complet du disque.

Dans ce cas, il peut être prévu une série de disques creux identiques, coaxiaux et parallèles, qui sont portés par un arbre tubulaire rotatif dont l'espace intérieur communique avec l'espace intérieur de chacun des disques, ces espaces formant (globalement) l'enceinte de condensation.

De préférence, cet arbre tubulaire est disposé verticalement et débouche à sa base dans un réceptacle recevant le condensat liquide.

Dans une forme de réalisation préférée du dispositif d'épandage, ce dispositif comprend un bras distributeur oscillant.

Lorsque ce bras est associé à une paroi d'échange thermique sous forme d'un disque creux tournant, le bras oscillant porte avantageusement un conduit de distribution de la matière fluide qui débouche à proximité de la première face du disque, et son extrémité débouchante oscille dans un.plan parallèle à la première face, suivant une direction approximativement radiale par rapport au disque.

Le bras oscillant peut être simplement entraîné par un mécanisme à came, et ce mécanisme est alors agencé de telle sorte que l'épandage se fasse avec une épaisseur de matière sensiblement constante sur toute la surface du disque.

Lorsqu'il est prévu une série de disques parallèles, il est naturellement associé à chaque disque un bras d'épandage oscillant ; l'ensemble de ces bras sont alors avantageusement entraînés par un mécanisme à came commun.

La récupération de la matière solide et sèche est réalisée au moyen d'un racleur qui s'applique contre la première face de la paroi mobile. Dans un mode de réalisation possible, ce racleur est fixe. Dans un autre mode de réalisation il est mobile, et porté par le bras oscillant.

En outre, il est possible de munir le bras oscillant d'un petit balai qui frotte contre la première face de la paroi mobile et est adapté pour refouler certains résidus vers l'extérieur du disque.

Avantageusement les moyens écraseurs aptes à favoriser l'émiettement et l'étalement de la couche de matière, consistent en une série de rouleaux qui s'appliquent contre la matière à déshydrater au cours de son transfert sur la paroi mobile et qui sont destinés à niveler la couche de matière durant son traitement. afin d'améliorer le couplage thermique avec cette paroi.

L'installation qui sert à la mise en oeuvre du procédé selon l'invention, qui comporte une machine du genre précédemment décrit, est équipée d'un échangeur de chaleur apte à réchauffer la matière entrant dans la machine à partir du condensat liquide et chaud qui en sort.

Si on a affaire à une matière fluide peu homogène, comme c'est souvent le cas du lisier, il est avantageusement prévu, en amont de l'échangeur de chaleur, un dispositif de mixage mécanique et, en aval de ce dernier, un dispositif de dégazage et de démoussage.

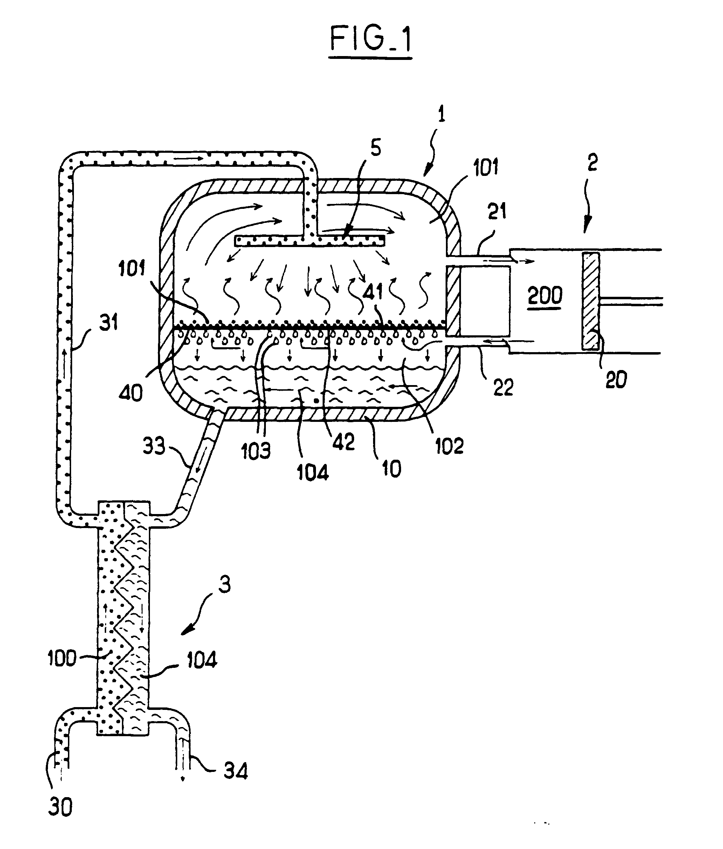

D'autres particularités et avantages de l'invention apparaîtront de la description et des dessins annexés qui en présentent des modes de réalisation préférentiels. Sur ces dessins : - la figure 1 est un schéma de principe destiné à mieux comprendre le processus et les phénomènes thermodynamiques qui sont mis en oeuvre dans le procédé objet de l'invention ;
- la figure 2 est une coupe axiale d'une machine conforme à l'invention ;
- la figure 3 est une vue générale schématique d'une installation de traitement qui est équipée de la machine de la figure 2;
- la figure 4 est une vue de côté schématique et partiellement coupée d'une paire de disques et des bras épandeurs qui leurs sont associés, ainsi du système d'entraînement à came de ces bras, ces différents organes équipant la machine de la figure 2 ;
- la figure 5 est une vue de dessus des éléments représentés à la figure 4 :
- les figures 6, 7 et 8 sont des schémas de trois installations de traitement de lisier utilisant le procédé et la machine conforme à l'invention ;
- les figures 9 et 10 sont des vues analogues aux figures 4 et 5 (respectivement) montrant une variante du dispositif d'épandage.

Sur le schéma de la figure 1, le cheminement de la matière et le déplacement des différents constituants en cours de traitement ont été figurés par des petites flèches.

La matière à traiter, désignée par la référence 100, est par exemple un lisier provenant d'un élevage porcin. Il s'agit d'une matière fluide, ayant la consistance d'une boue, constituée d'eau contenant des particules solides en suspension et diverses substances en solution.

Une ou plusieurs pompes, non représentées sur le schéma de la figure I permettent de faire circuler la matière dans le sens indiqué par les flèches. Le lisier 100 arrive tout d'abord, par une canalisation 30, dans un échangeur de chaleur 3. Cet échangeur peut être de type traditionnel ; sa fonction est de réchauffer le lisier qui le traverse en lui communiquant la chaleur fournie par un liquide 104 qui le traverse également en sens inverse. Comme on le verra plus loin. cette chaleur est fournie par les condensats liquides 104 provenant de la machine de traitement, cette dernière étant référencée 1.

A titre indicatif, le lisier entre dans l'échangeur 3 à une température de l'ordre de +15°C et en sort, par une canalisation 31, à une température de l'ordre de +100°C. Les condensats entrent dans l'échangeur par une canalisation 33 à une température de l'ordre de 110°C et en sortent par une canalisation 34 à une température de l'ordre de +25°C.

La machine 1 comprend une cuve 10 étanche et thermiquement isolée, à l'intérieur de laquelle est disposée une paroi 40. Celle-ci sépare l'espace intérieur du réservoir en deux enceintes 101, 102 disposées respectivement au-dessus et en dessous de la paroi 40, celle-ci étant supposée horizontale bien que ce ne soit pas indispensable. La paroi 40 est une plaque en matériau bon conducteur, de préférence métallique, de faible épaisseur.

La canalisation 31 débouche à l'intérieur de l'enceinte 101, et il est prévu dans cette enceinte un dispositif 5 (très schématiquement représenté) apte à déposer en continu le lisier chaud sur la face supérieure 41 de la paroi 40. Un mode de réalisation possible de ce dispositif 5 sera décrit plus loin. Il est adapté pour déposer et étaler le lisier fluide sur la face 41 sous la forme d'une couche mince et régulière, d'épaisseur comprise entre 0,2 mm et 2 mm.

Par la référence 2 on a désigné un compresseur mécanique, de type connu en soi, par exemple à piston 20 à mouvement coulissant alternatif. La chambre de compression 200 de ce compresseur communique par des conduits 21, 22 avec les enceintes 101 et 102 respectivement. Un jeu de soupapes appropriées est prévu qui autorisent l'admission des gaz de l'enceinte 101 dans la chambre 200 et obturent le conduit 22 au cours du recul du piston, tandis qu'elles autorisent l'échappement du gaz, après compression de celui-ci, de la chambre 200 à l'enceinte 102, tout en obturant le conduit 21, au cours du mouvement d'avance du piston (mouvement correspondant à un déplacement vers la gauche si on considère la figure 1).

A titre indicatif, la pression des vapeurs de l'enceinte 101 est de l'ordre de 1 bar tandis que la pression des vapeurs se trouvant dans l'enceinte 102 est de l'ordre de 1,4 bar, le taux de compression étant par conséquent de 1,4.

On suppose que le processus qui va être décrit à déjà été amorcé, et par conséquent que le lisier 100 qui arrive dans la machine se trouve à 100°C tandis que les condensats 104 qui en sortent sont à 110°C.

L'entraînement du compresseur 2 est réalisé par des moyens non représentés, par exemple par un moteur électrique.

La paroi 40 se trouve exposée par sa face supérieure 41 à une température de 100°C et par sa face inférieure 42 à une température de 110°C. Comme on a affaire à une paroi thermiquement bonne conductrice, et d'épaisseur faible (de l'ordre de I mm par exemple) elle se trouve par conséquent à une température intermédiaire.

Or cette température est choisie pour réaliser l'évaporation des vapeurs sous une pression de 1 bar et pour obtenir leur condensation sous une pression de 1,4 bar.

Par conséquent, l'eau et les autres liquides volatils se trouvant dans la couche de lisier en contact avec la face 41 vont s'évaporer progressivement. Le changement de phase liquide/vapeur étant endothermique, de la chaleur est prélevée de la paroi 40 au cours de ce processus.

Cette vapeur est ensuite comprimée dans le compresseur 2 et introduite dans l'enceinte inférieure 102. Lorsque la vapeur vient en contact avec la face inférieure 42 de la paroi, elle s'y condense. Comme on a affaire cette fois à un changement de phase vapeur/liquide, réaction exothermique, de la chaleur est libérée sur cette face 42. Par conduction à travers l'épaisseur de la paroi 40 elle est donc transmise à l'autre face, de sorte que l'énergie demandée par l'une des réactions est fournie par l'autre. En théorie, le seul apport d'énergie provient par conséquent du compresseur.

Les gouttelettes de condensat liquide se formant sur la face 42 tombent par gravité dans le fond du réservoir 10, à une température de l'ordre de 110°C. Elles quittent alors le réservoir par une canalisation 33 vers l'échangeur 104. Après refroidissement elles sont évacuées par une canalisation 34.

Il est important d'éliminer en permanence, au fur et à mesure de leur formation, les résidus solides qui se forment et adhèrent à la face 41, afin de les remplacer par de la matière nouvelle à traiter.

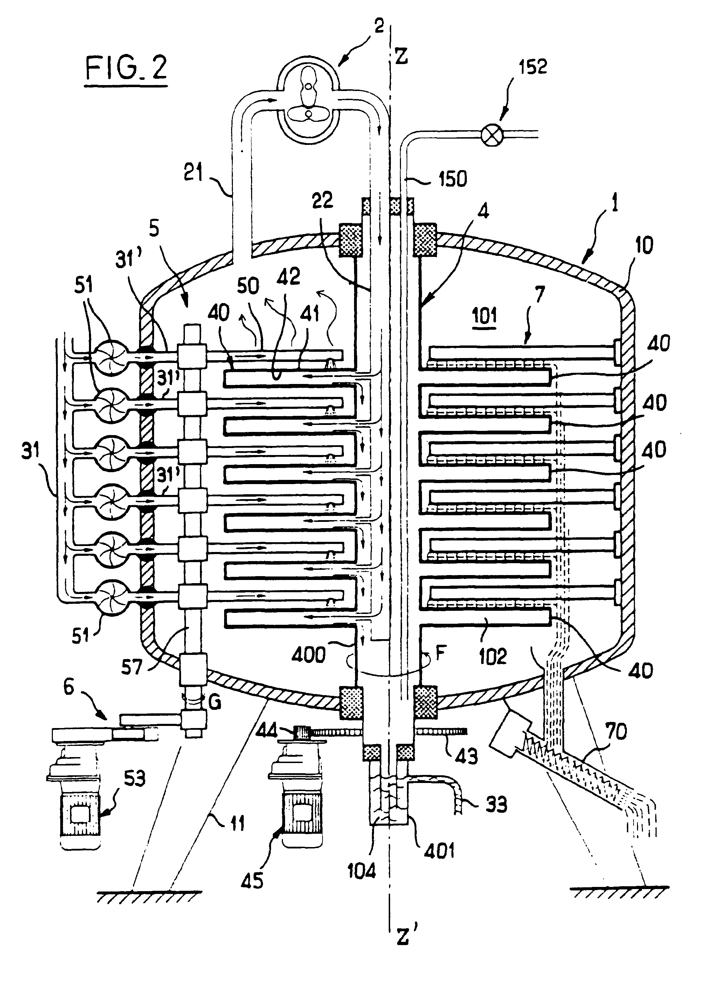

Une machine permettant de mettre en application cet objectif, et de traiter le lisier de manière industrielle, va maintenant être décrite en référence aux figures 2, 4 et 5.

Sur ces figures, les éléments qui sont similaires, ou correspondent par leur fonction, à ceux qui ont été décrits précédemment ont été affectés des mêmes références.

La machine 1 comprend un réservoir, ou cuve 10. Il s'agit d'un corps de révolution creux d'axe vertical ZZ' porté par un piètement 11. La paroi de la cuve 10 est étanche et isolée thermiquement, d'une manière similaire par exemple au ballon cumulus d'un chauffe-eau.

A l'intérieur de la cuve 10 est monté et guidé en rotation autour de l'axe vertical ZZ' un corps rotatif 3. Ce dernier est formé d'un tube central 400 portant une série de disques creux 40. Dans l'exemple représenté il est prévu un empilement de six disques creux dont les espaces intérieurs communiquent avec l'espace intérieur du tube 400. La fabrication de l'élément 4 est réalisée de toute manière appropriée. Ainsi, chaque disque creux est formé par exemple de deux plateaux discoïdes légèrement espacés et soudés l'un à l'autre à leur périphérie, l'espacement mutuel des deux plateaux pouvant être assuré par une pluralité de petites entretoises. Les plateaux présentent un trou central dont le bord est soudé à des viroles, l'ensemble des viroles formant le tube 400.

Le tube 400 est guidé en rotation dans des paliers étanches appropriés montés au sommet et à la base du réservoir 10.

Les plateaux supérieurs constitutifs de chaque disque 40 ont une face extérieure (dirigée vers le haut) horizontale, plane et bien lisse. Comme on le verra par la suite, ce sont ces plateaux qui jouent le rôle de parois d'échange thermique dont le rôle a été décrit plus haut.

A chaque disque creux 40 est associé un bras distributeur 50 faisant partie du dispositif d'épandage 5.

Chacun des bras s'étend horizontalement au-dessus du disque auquel il est affecté. L'ensemble des bras 50 est solidaire d'un arbre vertical 57 qui s'étend au bord de la série de disques à l'intérieur du réservoir 10. Cet arbre traverse la paroi de la cuve où il est guidé dans un palier étanche. Il est entraîné dans un mouvement oscillant, c'est-à-dire de pivotement en va-et-vient, autour de son propre axe vertical au moyen d'un mécanisme à came 6.

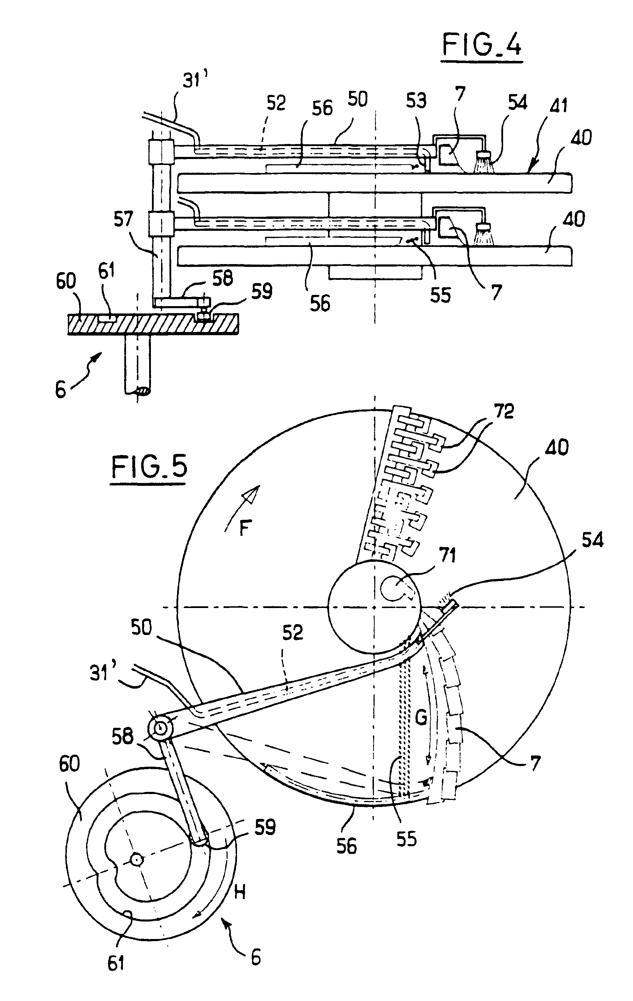

Comme on le voit plus précisément sur les figures 4 et 5, ce mécanisme 6 comprend un plateau de came horizontal 60 dans lequel est creusé un chemin de came 61. La came est entraînée en rotation, dans un mouvement uniforme et continu, par un moteur électrique 53 autour d'un axe vertical excentré. L'extrémité inférieure de l'arbre de commande 57 portant les bras 50 est solidaire d'un levier 58 muni d'un organe suiveur de came 59 tel qu'un petit galet s'engageant dans la rainure 61.

Par suite de la rotation de la came, le bras 50 va décrire un mouvement pivotant alternatif. A la figure 5, on a représenté en traits pleins la position du bras 50 la plus rapprochée du centre du disque 40, tandis que la position la plus écartée du centre est représentée en traits interrompus. L'extrémité libre du bras décrit par conséquent une trajectoire en arc de cercle approximativement radiale.

La canalisation 31 d'amenée du lisier est branchée sur une série de pompes volumétriques 51 aptes à assurer un débit constant et précis de distribution du lisier au bras 50. Chaque pompe 51 alimente un bras 50 et par conséquent un disque 40. Sur les figures 2, 4 et 5, on a désigné par la référence 31' les conduits d'alimentation en lisier qui quittent les pompes volumétriques 51. Chacun de ces conduits est un conduit souple, autorisant le débattement angulaire du bras d'épandage 50. Il débouche dans un canal 52 percé dans le bras 50, et s'étendant le long de celui-ci jusqu'à son extrémité libre. A cette extrémité est prévu un embout distributeur 53 dirigé vers le bas et débouchant à faible distance (quelques millimètres) de la face supérieure 41 du disque.

L'ensemble 4 est entraîné en rotation autour de son axe ZZ' par un motoréducteur électrique 45 dont l'arbre de sortie possède un pignon 44 engrènant avec une roue dentée 43 démultiplicatrice de vitesse solidaire du tube 400. Cette rotation se fait de manière relativement lente (0,1 à 1 tour/mn par exemple).

Sur les figures, les sens de rotation des disques 40 et du plateau de came 60 sont symbolisés par les flèches F et respectivement H. Le mouvement oscillant du bras 50 est symbolisé par les flèches G.

Juste en amont (si on considère le sens de déplacement du disque), de l'extrémité libre qui porte l'embout de distribution 53 du bras 50 est disposé un racleur 7. Ce dernier est constitué d'une série de lamelles élastiques inclinées portées par un support fixe (solidaire du réservoir 10). Les lamelles sont disposées selon un contour en spirale qui suit approximativement la trajectoire de l'embout 53, tout en favorisant l'évacuation des résidus. Comme on le verra par la suite, l'organe racleur 7 sert à retirer du disque les résidus solides et secs et à les diriger vers l'extérieur du disque d'où ils peuvent tomber par gravité vers le bas de la cuve.

Sur une plage du disque située du côté opposé (par rapport à l'axe du disque) de la plage décrite par le bras 50, est disposée une série de rouleaux écraseurs 72. Ce sont de petits rouleaux cylindriques, montés fous autour d'un axe horizontal disposés radialement sur le disque. L'ensemble des rouleaux est monté sur un support fixe, c'est-à-dire solidaire du réservoir 10. Chaque rouleau est sollicité élastiquement vers le bas de sorte qu'il s'applique avec une certaine force contre le disque, favorisant l'émiettement et l'étalement de la couche de matière transférée par le disque. A cet égard, il convient de noter qu'un peu après l'épandage, il apparaît à la surface de la couche des aspérités moins sèches. Il convient d'écraser ces sommets "humides" et de les coller contre la face chaude du disque pour finir de les déshydrater.

A l'extrémité libre du bras 50 est fixé un petit balai 54 qui vient en appui contre le disque 40 juste devant les moyens de raclage 7 (si on considère le sens de rotation du disque).

Un peu en arrière (toujours si on considère le sens de déplacement du disque) des organes racleurs 7 se trouve un dispositif 55 servant à crever les bulles qui se forment au moment du dépôt du lisier sur le disque. Ces bulles, envahissantes, risqueraient de former des mousses débordant du disque.

Le dispositif 55 consiste en quelques fils fins métalliques qui sont disposés suivant des rayons juste au-dessus du disque. Les fils sont maintenus par des supports isolants et sont alimentés électriquement (par une source électrique non représentée) de manière à être portés à quelques centaines de volts par rapport au potentiel du disque. Ainsi, dès que les bulles arrivent en contact avec les fils, ils sont immédiatement pulvérisés. Lorsque les fils sont encrassés par les éclaboussures du lisier, il suffit d'augmenter sensiblement l'intensité du courant pour les porter au rouge et pyroliser les petits résidus encombrants. On notera enfin la présence dans la région centrale de chaque disque d'un dispositif 71 d'injection de vapeur. Il s'agit d'une soufflette qui est alimentée par des conduits appropriés (non représentés) à partir des vapeurs venant du compresseur. La vapeur sort à grande vitesse de la soufflette 71, l'arrivée de vapeur se faisant dans une plage du disque où les résidus solides sont presques secs, juste avant leur raclage.

Ceci permet d'améliorer le séchage final par une légère augmentation de température de ce secteur, due à l'énergie de surchauffe (conséquence de toute compression adiabatique).

En référence à la figure 2, le compresseur mécanique 2 représenté sur cette figure est un compresseur mécanique de type connu, à deux pistons rotatifs engrenant l'un avec l'autre. Le conduit 21, branché sur l'enceinte 101 correspondant à l'espace intérieur au réservoir 10 et extérieur à la série de disques 40, permet d'amener les vapeurs règnant dans cette enceinte au compresseur 2. Ce dernier comprime ces vapeurs et les refoule par un conduit 22 à l'intérieur de l'enceinte 102, enceinte qui correspond aux espaces intérieurs au tube 400 et à chacun des disques 40.

Enfin, cet espace intérieur 102 communique avec l'extérieur par un conduit 150 normalement obturé par une vanne 152, de préférence une électro-vanne, servant à purger ladite enceinte, comme cela sera expliqué plus loin.

Ce dispositif fonctionne de la manière suivante.

On suppose que le processus a été amorcé et que les conditions de température et de pression sont les mêmes que celles qui ont été décrites précédemment en référence à la figure 1.

Les moteurs 45 et 53 étant en route, le corps 4 tourne à vitesse lente autour de l'axe vertical ZZ'. L'ensemble des bras 50 décrit un mouvement oscillant autour d'un axe vertical correspondant à l'axe de l'arbre 57, ce mouvement de va-et-vient angulaire lui étant imprimé via le mécanisme à came 6. Le lisier chaud arrive dans chacun des bras 50, avec un débit constant, qui lui est imposé par la pompe volumétrique 51. Ce lisier fluide est déposé sur le disque par la buse distributrice 53. En raison des déplacements conjugués du disque en rotation et du mouvement de balayage du bras 50, la matière fluide se dépose progressivement et régulièrement sur toute la surface du disque, ceci sous la forme d'une couche mince d'épaisseur rigoureusement constante, cette épaisseur étant par exemple de 0,5 mm.

Au cours d'un cycle, c'est-à-dire pendant une rotation sur un tour, chaque élément de matière déposée va subir une évaporation progressive de l'eau et des autres constituants volatils qu'il contient. Cette évaporation résulte du phénomène déjà expliqué en référence à la figure 1. A peu près à mi-chemin du cycle, la couche de matière est écrasée et aplatie par la série de rouleaux presseurs 72. Les vapeurs résultant de l'évaporation, qui sont en grande partie de la vapeur d'eau, sont portées à une pression supérieure à la pression initiale, par exemple de 1 bar à 1,4 bar au moyen du compresseur 2. Ces vapeurs pénètrent à l'intérieur des disques rotatifs 40 et, comme cela a déjà été expliqué plus haut, se condensent contre les parois des disques, fournissant à ceux-ci l'équivalent de la chaleur qui a été requise pour l'évaporation des vapeurs. Les condensats, qui consistent essentiellement en de l'eau liquide, s'écoulent par gravité dans un réceptacle 401 situé à la base du tube 400. La vitesse de rotation des disques est déterminée de telle sorte que la matière transportée par ces disques a atteint sa siccité maximale, ou presque, lorsqu'elle est arrivée au niveau des organes racleurs 7. Cette matière est donc alors uniquement composée de particules sèches. Celles-ci sont décollées du disque par les organes racleurs. La petite brosse 54 les chasse vers le côté du disque. A cet égard, il convient de mentionner que la brosse a une action uni-directionnelle, et elle n'est active que lorsqu'elle se déplace du centre vers l'extérieur disque. Des moyens de conception simple, à la portée de l'homme du métier, permettent de l'escamoter lors de son mouvement retour, vers le centre du disque.

Bien entendu, les résidus secs sont récupérés dans un réceptacle approprié disposé à la base du réservoir 10. Un dispositif 70 de type connu, par exemple à vis sans fin. permet d'émietter ces particules et de les distribuer sous forme d'une poudre relativement homogène ou de granulés, en vue de leur conditionnement, par exemple de leur ensachage.

Comme cela a déjà été dit, le dispositif "casse-bulles" électrique 55 permet de fluidifier le plus convenablement possible le lisier au moment où il est déposé sur le disque, de manière à former une couche mince et régulière. L'apport de vapeur surchauffée par la soufflette 71 à la fin du cycle améliore la siccité du produit obtenu.

On notera que le contour du chemin de came 61, ayant sensiblement la forme d'un coeur, est déterminé de telle manière que la densité de matière, c'est-à-dire la quantité de matière déposée par unité de surface, soit identique en chaque point du disque. Il en résulte naturellement que la vitesse de déplacement, dans le sens radial, de l'embout distributeur 53 diminue progressivement lorsque cet embout se déplace vers l'extérieur du disque (où la vitesse de défilement de la face du disque est plus grande).

Le conduit de purge 150 permet l'élimination périodique des substances résiduelles incondensables qui restent dans l'enceinte intérieure 102. Ces substances, notamment de l'oxyde de carbone (CO₂) risqueraient en effet de contrarier le transfert thermique de la chaleur aux disques.

A titre indicatif, on peut prévoir une machine comportant une série d'une quinzaine de disques superposés ayant chacun un diamètre de l'ordre de 2 mètres. La vitesse de rotation des disques sera de l'ordre de 10 à 15 tours par heure, et la période d'oscillation du bras épandeur 50 de 2 secondes environ. Si on travaille dans les conditions de température et de pression données plus haut, il sera alors possible de traiter à l'aide d'une telle machine environ 0,5 m³ de lisier par heure.

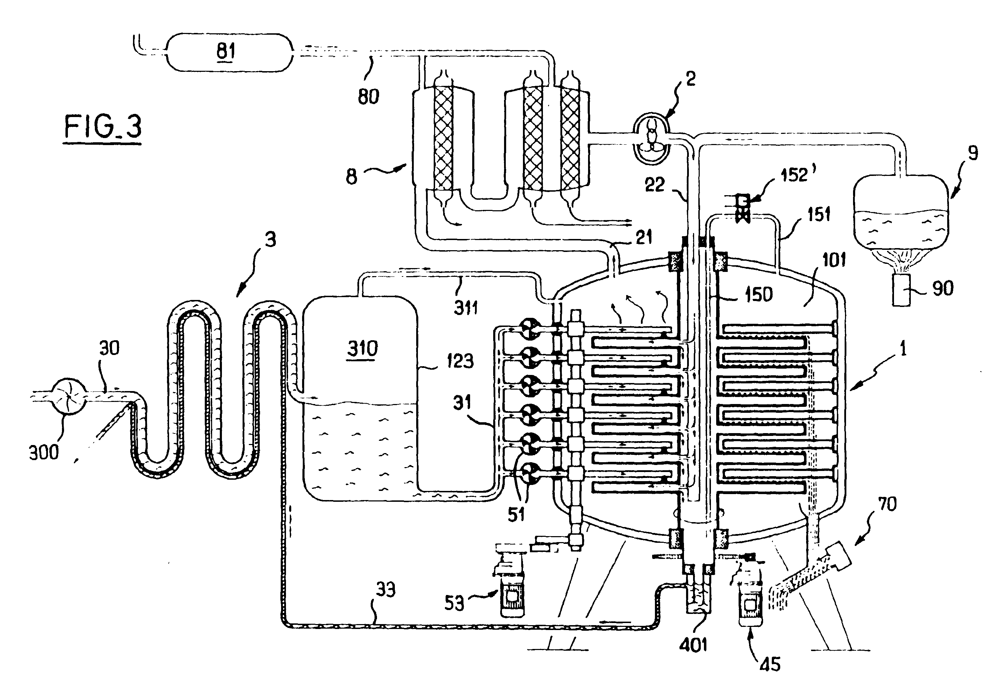

La machine I qui vient d'être décrite, ainsi que le compresseur 2 qui l'équipe, ont été intégrés dans l'installation représentée à la figure 3.

Sur ce dessin on a désigné par la référence 300 la pompe servant à amener le lisier encore froid dans l'échangeur 3. Ce lisier a été préalablement mixé mécaniquement de manière à être bien homogène. En aval de l'échangeur de chaleur 3 est installé un dispositif 123 de dégazage et de démoussage du lisier réchauffé. Il a pour fonction d'éliminer les mousses abondantes qui se créent dans la matière par suite de son réchauffage. Ce dispositif, qui ne fait pas à proprement parler de l'invention, peut être un dispositif connu en soi. Il transforme la quasi totalité des bulles en produit liquide, qui vient se mélanger à la matière fluide, ou en gaz. Les gaz produits 310 sont acheminés par une canalisation appropriée 311 dans l'enceinte 101 de la machine.

Dans cette installation, les vapeurs qui se dégagent à l'intérieur de l'enceinte 101 traversent un ensemble séparateur épurateur 8 avant d'atteindre le compresseur 2. Ces vapeurs comprennent, outre la vapeur d'eau, du gaz carbonique (CO₂), de l'amoniac (NH₃), ainsi que divers substances volatiles, notamment aromatiques. Le dispositif 8, qui peut être d'un type connu en soi, réalise un traitement physico-chimique des vapeurs. Il élimine en particulier les produits incondensables de la vapeur, c'est-à-dire le gaz carbonique, quelques gaz résiduels, une partie des substances volatiles et autres produits odorants. Par ailleurs, il bloque la totalité de l'ammoniac et le restitue sous forme de sels d'ammonium ayant valeur d'engrais azoté. Une action du séparateur épurateur est également de réduire considérablement la teneur en élément organiques responsables de la DCO (Demande Chimique en Oxygène) des distillats bruts.

Le dispositif délivre une vapeur épurée, débarassée de ses gaz parasites et donc facile à condenser dans les disques.

Les gaz indésirables sont évacués par un conduit 80 et rejetés dans l'atmosphère après passage dans un dispositif 81 de traitement.

Les vapeurs épurées sont comprimées par le dispositif compresseur 2 et introduites dans l'enceinte 102 de la machine, c'est-à-dire à l'intérieur des disques creux.

Afin d'amorcer le processus, il est prévu un générateur de vapeur 9 réchauffé par un brûleur à gaz 90. Ce générateur fournit à l'enceinte intérieure la vapeur d'eau nécessaire pour chauffer les disques au départ et ainsi mettre en route le processus. Bien entendu, dès que le processus de traitement s'entretient automatiquement, on cesse d'utiliser la chaudière auxiliaire 9.

Les condensats liquides qui sortent de la machine sont refroidis dans l'échangeur de chaleur 3 et ressortent de celui-ci sous la forme d'une eau froide et épurée, susceptible d'être rejetée en rivière conformément aux normes de l'environnement.

Dans l'installation qui vient d'être décrite, l'ensemble séparateur/épurateur 8 retient en principe les substances incondensables résiduelles. Toutefois, malgré les précautions prises à ce niveau, il peut arriver que quelques unes de ces substances résiduelles s'accumulent dans les disques et les rendent moins performants, voire inopérants. Pour éviter cela, il est prévu un système de purge cyclique à l'aide de l'électro-vanne 152'. Les gaz sortant de l'enceinte 102 sont alors renvoyés dans l'enceinte 101, ce qui limite considérablement les pertes d'énergie. Ainsi, aucun résidu ne risque de gêner la condensation à l'intérieur des disques.

Les résidus secs qui sont raclés sur les disques ne sont généralement pas compacts. Ils sont très volumineux, de densité de l'ordre de 0,3. Pour réduire l'encombrement de ces résidus, et pour simplifier leur manipulation, il est intéressant soit de les broyer finement pour obtenir une poudre, soit de les transformer en granulés. Il est ensuite facile de stocker la poudre ou les granulés, par exemple dans des citernes ou des sacs, et de les transporter vers les lieux d'utilisation.

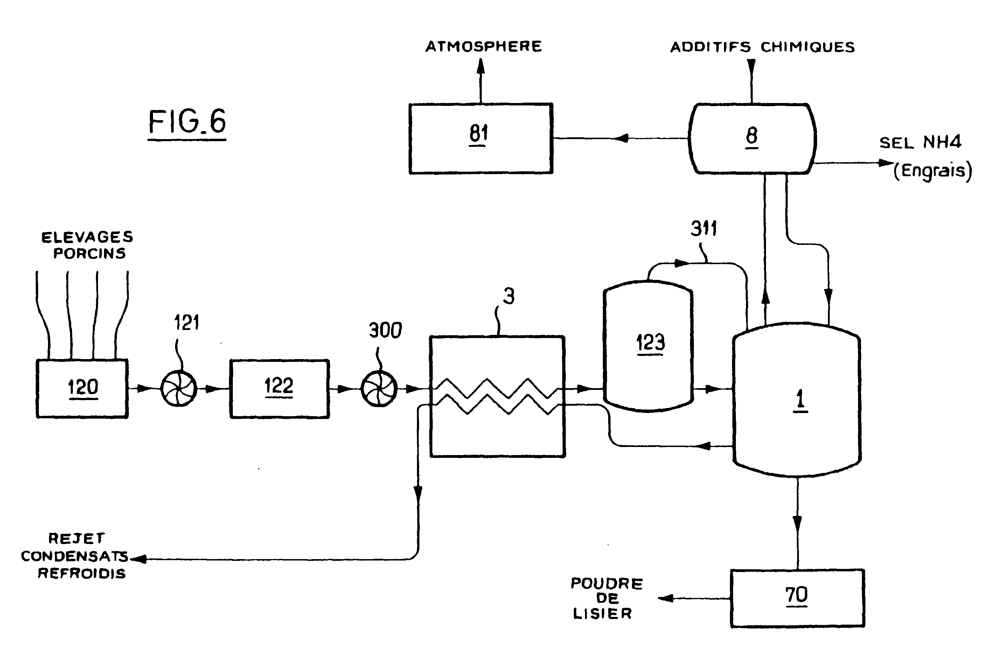

La figure 6 représente sous forme de schéma-blocs une installation globale, qui inclut l'installation de la figure 3.

Le lisier provenant d'élevages porcins est collecté dans une citerne de stockage 120. Une pompe 121 achemine, préalablement au traitement, le lisier dans un dispositif de mixage mécanique 122 dont le rôle est d'améliorer l'homogénéité et la fluidité de la matière. Une pompe 300 transfère ensuite la matière jusqu'à la machine de traitement 1, via l'échangeur 3 et le démousseur/dégazeur 123. Les vapeurs reçoivent un traitement préalable physico-chimique dans l'épurateur/séparateur 8, lequel est approvisionné en additifs chimiques adéquats et fournit des sels ammonium (engrais). Après désodorisation dans le dispositif de traitement 81, les vapeurs indésirables sont éjectées dans l'atmosphère tandis que la vapeur d'eau est envoyée via le compresseur (non représenté ici) dans la machine. Les résidus de lisier secs récupérés sont recueillis et transformés en poudre par le dispositif 70. L'eau résultant de la condensation est rejetée après refroidissement dans l'échangeur 3.

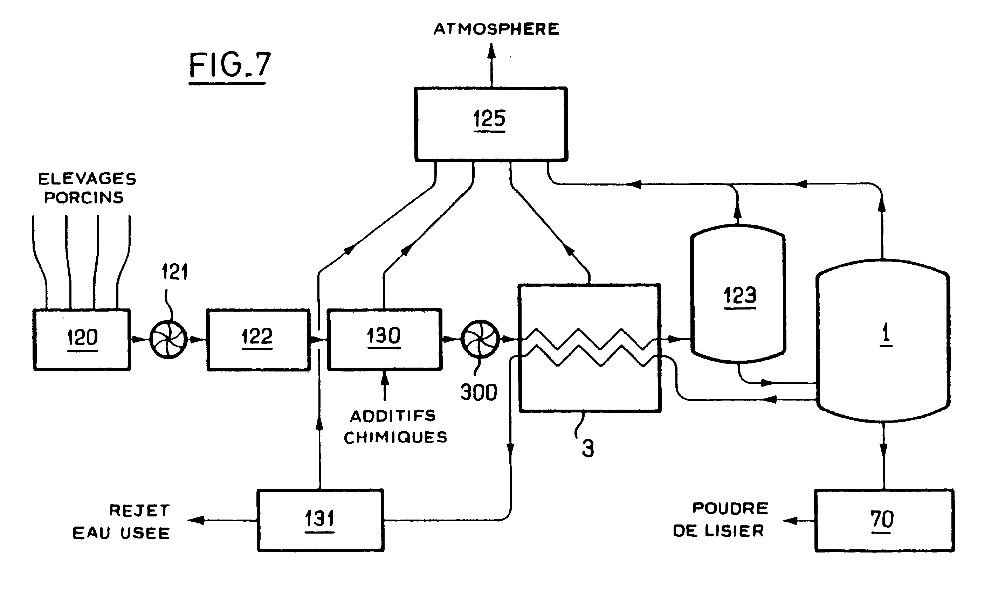

L'installation représentée également sous forme de schéma bloc à la figure 7 se distingue essentiellement de la précédente par le fait que c'est le lisier liquide - et non les vapeurs de lisier - qui est soumis à un traitement chimique. Le dispositif de traitement, référencé 130, est inséré entre le dispositif de mixage 122 et la pompe 300. Sa fonction est essentiellement d'extraire du lisier le gaz carbonique et diverses vapeurs indésirables. Dans cette configuration, il est nécessaire de traiter l'eau des condensats avant de les rejeter en rivière. Ceci est effectué par un dispositif de traitement 131. Les gaz indésirables provenant des dispositifs de traitement 130, 131, de l'échangeur 3, du dégazeur 123, et de l'enceinte d'évaporation de la machine 1 sont traités et désodorisés par un dispositif adapté 125 avant leur rejet dans l'atmosphère.

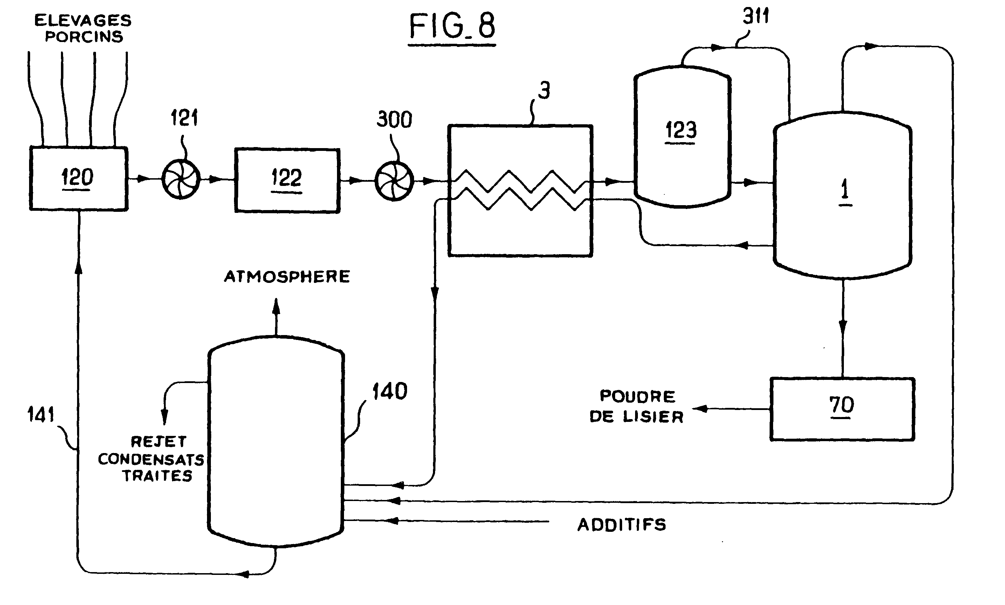

Dans l'installation représentée à la figure 8, on réalise un traitement biologique des condensats. L'ensemble du processus réalisé en amont de la machine 1 est identique à celui qui est réalisé par l'installation de la figure 6, à la différence que les différentes vapeurs émises ne sont pas traitées. Le traitement se fait en aval de la machine 1. La référence 140 désigne un dispositif de traitement biologique, qui peut être de type connu en soi. Le dispositif est approvisionné par des additifs appropriés. Il reçoit d'une part les rejets incondensables provenant de la machine de déshydratation 1, rejets qui contiennent notamment du gaz carbonique et des substances volatiles organiques. Le dispositif 140 traite également le condensat refroidi provenant de l'échangeur 3, condensat qui contient notamment de l'eau, de l'ammoniac et des substances responsables de la DCO.

Le dispositif a pour fonction de produire des condensats non polluants, pouvant être évacués en rivière, et des gaz non polluants pouvant être rejetés dans l'atmosphère. Les boues de décantation résultant du traitement biologique sont recyclées, via une canalisation référencée 141, c'est-à-dire mélangées avec le lisier à traiter pour y être déshydratées.

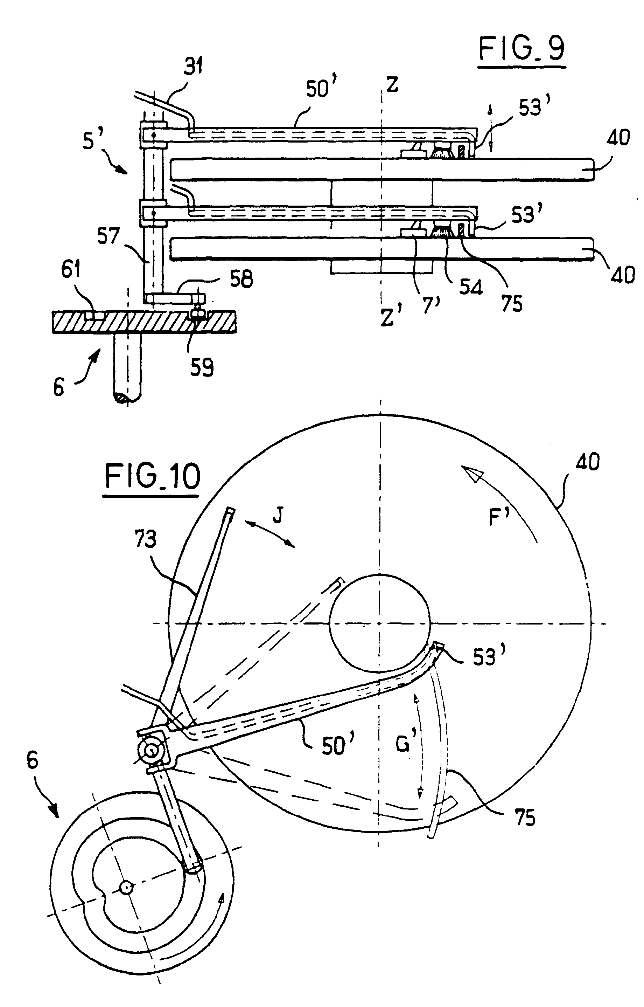

Les figures 9 et 10 représentent une variante possible des moyens d'épandage de la matière sur les disques. Sur ces figures, les éléments différents mais ayant des fonctions similaires aux éléments du mode de réalisation des figures 4 et 5 ont reçu les mêmes références affectées du signe "prime" (').

La commande de la série de bras oscillants 50' se fait de la même manière que dans le mode de réalisation précédent. Cette oscillation est commandée par un mécanisme à came 6. On notera que le disque 40 tourne en sens inverse par rapport à celui de la figure 5. Le sens de rotation est figuré par la flèche F' à la figure 10. Juste au-dessus du disque est disposée une barrière fixe 75. Il s'agit d'une tige ayant la forme d'un arc de cercle qui est sensiblement centré sur l'arbre 57 d'oscillation du bras 50'. Cette barrière a donc une direction approximativement radiale. Elle frotte légèrement contre la face supérieure du disque et a pour fonction de séparer de manière précise la matière sèche, située en avant de la barrière, de la matière fluide fraîchement répandue, située derrière la barrière. La distribution se fait par un embout 53' qui est situé tout à l'extrémité du bras 50', derrière cette barrière.

Le bras 50' est également muni d'un organe racleur 7' et d'un petit balai 54', éventuellement amovible. Ceux-ci sont situés devant la barrière 75 et sont donc adaptés pour chasser vers l'extérieur les résidus secs lorsqu'ils arrivent dans cette zone. Bien entendu, des mécanismes de débrayage automatique sont prévus qui rendent l'organe racleur 7' et le petit balai 54' inopérants lors du mouvement retour du bras, vers l'intérieur du disque. La barrière permet de retenir les résidus qui n'auraient pas été chassés au cours d'un mouvement du bras. Il se forme alors un petit tas de résidus contre la barrière, et ce tas est chassé lors du mouvement suivant.

Il va de soi que dans cette variante il est possible également d'équiper les disques d'un casse-bulles et d'une soufflette assurant la surchauffe du produit avant son évacuation.

Dans la variante des figures 9 et 10, il est prévu un second bras oscillant 73 également porté par l'axe 57, et par conséquent entraîné par le mécanisme à came 6 (double flèche J, figure 10). Ce bras est pourvu de un ou plusieurs rouleaux écraseurs qui vont rouler sur le disque afin d'aplatir et niveler la couche de matière en cours de transit sur le disque.

On pourrait, tout en faisant usage de la technique qui fait l'objet de la présente invention, faire appel à divers types de surfaces d'échange thermique.

Ainsi, les disques horizontaux sont particulièrement adaptés pour le traitement de produits hétérogènes, sédimentables et moussants, produits dont le lisier est l'exemple type.

Pour des produits homogènes, peu sédimentables et peu moussant, ayant la consistance d'une pâte à crêpes par exemple, il serait possible d'utiliser des disques verticaux. Pour des produits grossiers (du type fumier. terreau, etc.) l'utilisation de surfaces cylindriques pourrait être envisagée. Enfin pour des produits granulaires à faible teneur en eau (sable mouillé, granulés, graines, céréales par exemple) il serait possible d'utiliser des surfaces tubulaires pour l'échange thermique.

Il importe toutefois que l'état de surface de la paroi d'échange thermique soit très bon, c'est-à-dire lisse et régulier.

Il est important, de rappeler également que la matière à déshydrater doit être déposée en couche fine et régulière afin d'éviter qu'il ne se crée au sein de la matière de petits écarts de température localisés dûs notamment aux phénomènes de caléfaction et de conduction thermique dans le résidu sec. Cette précaution est indispensable si on veut obtenir un résidu parfaitement sec, avec un prix de revient faible. Il convient de rappeler enfin qu'il est important que les différences entre les pressions d'une part, et entre les températures d'autre part, qui règnent dans les enceintes d'évaporation et de condensation doivent être les plus faibles possibles. Des essais ont montré que le taux de compression c'est-à-dire les rapports de moyen entre la pression de condensation et la pression d'évaporation était avantageusement compris entre 1,25 et 1,5. Ceci permet d'obtenir un produit ayant entre 70 et 85 % de matière sèche.

Suivant les applications, les températures d'évaporation pourront être soit inférieures soit supérieures à la température de 100°C qui a été sélectionnée pour le traitement du lisier. En effet, comme cela a été dit au début de la description, la présente technique peut trouver diverses applications, aussi bien dans le domaine agricole et agro-alimentaire que dans le domaine industriel. Si on doit traiter des matières contenant de l'eau mais sous forme de morceaux (par exemple des morceaux de viande rejetée des abattoirs), on peut envisager, préalablement au traitement proprement dit, un prétraitement permettant de rendre la matière fluide, ce prétraitement comprenant le mixage des morceaux et leur mélange avec de l'eau. On obtient ainsi une matière fluide, pouvant s'écouler facilement dans les canalisations et les pompes équipant l'installation, et être déposée sous forme d'une fine couche sur les parois d'échange thermique.

## Revendications

1. Procédé d'extraction des résidus solides se trouvant en suspension ou en solution dans une matière fluide contenant des substances volatiles, et notamment d'une matière aqueuse, **caractérisé par le fait qu'**on épand la matière en continu et sous la forme d'une couche mince et régulière, dont l'épaisseur est comprise entre 0,2 et 2 millimètres, sur l'une (41) - dite "première face" - - des deux faces d'une paroi d'échange thermique (40), cette paroi étant chauffée à une température suffisante pour réaliser l'évaporation rapide de l'eau et/ou des constituants volatils de la matière, qu'on écrase la couche de matière contre cette première face (41) pour la niveler et favoriser son émiettement et son étalement, qu'on enlève en continu les résidus solides et secs au fur et à mesure qu'ils se forment sur ladite première face (41), par raclage de cette dernière, et qu'on chauffe ladite paroi d'échange thermique (40) au moyen de la vapeur résultant de l'évaporation, après que cette vapeur ait été comprimée mécaniquement puis mise en contact avec l'autre face (42) - dite "seconde face" - de la paroi (40), de telle manière qu'elle s'y condense, et qu'on évacue le condensat liquide et chaud, les substances incondensables étant éliminées par un traitement physico-chimique avant recompression de la vapeur.

2. Procédé selon la revendication 1, **caractérisé par le fait qu'**avant son épandage sur la paroi d'échange thermique, la matière est réchauffée par le condensat.

3. Procédé selon l'une des revendications 1 ou 2, **caractérisé par le fait que** la matière est du lisier d'élevage.

4. Procédé selon la revendication 3, **caractérisé par le fait que** le lisier est soumis à un démoussage et/ou à un dégazage avant son épandage.

5. Procédé selon l'une des revendications 3 ou 4, **caractérisé par le fait que** la vapeur située du côté de la première face (41) de la paroi d'échange thermique se trouve à une pression de 1 bar environ et à une température de l'ordre de 100°C tandis que la vapeur située de l'autre côté se trouve à une pression de 1,4 bar environ et à une température de l'ordre de 110°C.

6. Procédé selon l'une des revendications I à 5, **caractérisé par le fait qu'**on augmente la température de ladite paroi (40) en utilisant l'énergie de surchauffe, dans la zone précédant le raclage, afin d'y améliorer le séchage des résidus solides.

7. Machine d'extraction des résidus solides se trouvant en suspension ou en solution dans une matière fluide contenant des substances volatiles, et notamment d'une matière aqueuse, **caractérisée par le fait qu'**elle comprend :
- une paroi d'échange thermique (40) séparant l'une de l'autre deux enceintes (101. 102), l'une d'elles (101) - dite "d'évaporation" - étant située du côté de la première face (41) tandis que l'autre (102) - dite "de condensation" - est située du côté de la seconde face (42) ;
- un dispositif (5) d'épandage de la matière à traiter sous la forme d'une couche mince sur ladite première face (41) ;
- des moyens écraseurs (72) aptes à favoriser l'émiettement et l'étalement de la couche de matière sur cette première face (41) ;
- des moyens (2 ; 21, 8) aptes à prélever la vapeur produite dans l'enceinte d'évaporation (101), en éliminer les produits incondensables par un traitement physico-chimique, l'épurer, la comprimer, et introduire la vapeur comprimée dans l'enceinte de condensation (102) ;
- des moyens (7, 54) servant à récupérer les résidus solides et secs se formant sur ladite première face (41) ;
- des moyens (33) d'évacuation du condensat liquide se formant dans l'enceinte de condensation (102) ;
- des moyens (150, 152) qui permettent d'extraire périodiquement de ladite enceinte de condensation (102) les gaz résiduels incondensables.

8. Machine selon la revendication 7, **caractérisée par le fait que** ladite paroi d'échange thermique (40) est mobile et décrit un mouvement cyclique à trajectoire fermée, la matière à traiter étant déposée sur cette paroi en début de cycle, tandis que les résidus solides sont retirés en fin de cycle.

9. Machine selon la revendication 8, **caractérisée par le fait qu'**elle comprend une série de parois mobiles (40) identiques entraînées en synchronisme.

10. Machine selon la revendication 9, **caractérisée par le fait qu'**elle comporte une série de pompes volumétriques (51) aptes à distribuer chacune la matière à épandre sur l'une des parois mobiles (40).

11. Machine selon l'une des revendications 8 à 10, **caractérisée par le fait que** ladite paroi d'échange thermique est l'une des parois d'un disque creux tournant autour de son axe et dont l'espace intérieur constitue ladite enceinte de condensation, tandis que l'espace extérieur au disque constitue l'enceinte d'évaporation.

12. Machine selon la revendication 11, **caractérisée par le fait qu'**elle comporte une série de disques creux (40) coaxiaux et parallèles portés par un arbre tubulaire rotatif (400) dont l'espace intérieur communique avec l'espace intérieur de chacun des disques, ces espaces formant l'enceinte de condensation.

13. Machine selon la revendication 12, **caractérisée par le fait que** ledit arbre tubulaire (400) est disposé verticalement et débouche à sa base dans un réceptacle (401) recevant le condensat liquide.

14. Machine selon l'une des revendications 7 ou 8, **caractérisée par le fait que** le dispositif d'épandage (5) comprend un bras oscillant (50).

15. Machine selon les revendications 11 et 14 prises en combinaison, **caractérisée par le fait que** le bras oscillant (50) porte un conduit de distribution (52) de la matière qui débouche à proximité de ladite première face (41) du disque (40) formant paroi d'échange thermique, et que l'extrémité débouchante (53) oscille dans un plan parallèle à cette première face (41) suivant une direction approximativement radiale.

16. Machine selon la revendication 15, **caractérisée par le fait que** le bras oscillant (50) est entraîné par un mécanisme à came (6) apte à assurer une épaisseur d'épandage sensiblement constante de la matière sur toute la surface du disque (40).

17. Machine selon les revendications 12 et 14 prises en combinaison, **caractérisée par le fait qu'**à chaque disque (40) est associé un bras d'épandage oscillant (50) et que l'ensemble de ces bras sont entraînés par un mécanisme à came commun (6).

18. Machine selon l'une des revendications 8 à 17, **caractérisée par le fait qu'**elle comporte un organe racleur fixe (7) s'appliquant contre ladite première face (41) de la paroi mobile (40).

19. Machine selon l'une des revendications 14 à 17, **caractérisée par le fait qu'**elle comporte un organe racleur (7') porté par ledit bras oscillant (50').

20. Machine selon l'une des revendications 14 à 17, **caractérisée par le fait que** le bras oscillant (50, 50') est muni d'un petit balai (54, 54') frottant contre ladite première face (41) de la paroi mobile (40).

21. Machine selon l'une des revendications 8 à 20, **caractérisée par le fait que** lesdits moyens écraseurs aptes à favoriser l'émiettement et l'étalement de la couche de matière consistent en une série de rouleaux (72) s'appliquant contre la matière à déshydrater au cours de son transfert sur la paroi mobile (40).

22. Installation pour la mise en oeuvre du procédé selon la revendication 2, **caractérisée par le fait qu'**elle comporte une machine (1) conforme à l'une des revendications 7 à 21 et qu'elle est équipée d'un échangeur de chaleur (3) apte à réchauffer la matière entrant dans la machine (1) à partir du condensat liquide et chaud qui en sort.

23. Installation selon la revendication 22, servant au traitement du lisier d'élevage, **caractérisée par le fait qu'**elle comprend un dispositif de mixage mécanique (122) situé en amont de l'échangeur de chaleur (3), et un dispositif de dégazage et de démoussage (123) situé en aval de ce dernier.

24. Installation selon la revendication 23, **caractérisée par le fait que** l'enceinte de dégazage (310) du dispositif de dégazage et ce démoussage (123) communique par un conduit (311) avec ladite enceinte d'évaporation (101).

## Claims

1. A method of extracting solid residues to be found in suspension or in solution in a fluid that contains volatile substances, and in particular aqueous substances, the method being **characterized by** the fact that the substance is applied continously in the form of a thin and uniform layer of thickness lying in the range 0.2 mm to 2 mm on a "first" face (41) of the two faces of a heat exchange wall (40), said wall being heated to a temperature sufficient for implementing rapid evaporation of the water and/or of the volatile components of the substance, that the layer of substance is crushed against this first face (41) so that the layer of substance is levelled, the breaking up and the spreading out of the layer being thereby encouraged , with the dry solid residue thereof being continously removed as it forms on said first face (41) by scraping said face, and said heat exchange wall (40) is heated by the vapor that results from the evaporation after said vapor has been mechanically compressed and then put into contact with the other "second" face (42) of the wall (40) in such a manner as to cause it to condense thereon, and the hot liquid condensate is removed therefrom, the non-condensible substances being eliminated by a physicochemical treatment prior to recompression of the vapor.

2. A method according to claim 1, **characterized by** the fact that prior to its application to the heat exchange wall, the substance is heated by the condensate.

3. A method according to claim 1 or 2, **characterized by** the fact that the substance is farm slurry.

4. A method according to claim 3, **characterized by** the fact that the slurry is subjected to de-foaming and/or degassing prior to application thereof.

5. A method according to claim 3 or 4, **characterized by** the fact that the vapor on the same side as the first face (41) of the heat exchange wall is at a pressure of about 1 bar and at a temperature of about 100° C, whereas the vapor situated on the other side thereof is at a pressure of about 1.4 bars and at a temperature of about 110° C.

6. A method according to any one of claims 1 to 5, **characterized by** the fact that the temperature of said wall (40) in the zone preceding scraping is raised by using superheat energy so as to improve the drying of solid residues in said zone.

7. A machine for extracting solid residues to be found in suspension or in solution in a fluid that contains volatile substances, and in particular aqueous substances, **characterized by** the fact that it comprises
- a heat exchange wall (40) separating two enclosures (101, 102) from each other, an "evaporation" one of the enclosures (101) being situated on the same side as the first face (41), while the "condensation" other enclosure (102) is situated on the same side as the second face (42) ;
- an applicator device (5) for applying the substance to be treated in the form of a thin layer on said first face (41);
- crushing means (72) suitable for encouraging the breaking out and the spreading of the layer of substance on said first face (41);
- means (2 ; 21, 8) suitable for : extracting the vapor produced in the evaporation enclosure (101); for elimimating non-condensible substances therefrom by a physicochemical treatment ; for purifying it ; for compressing it ; and for injecting the compressed vapor into the condensation enclosure (102) ;
- means (7, 54) for recovering the dry solid residue that forms on said first face (41);
- means (33) for removing the liquid condensate that forms in the condensation enclosure (102), and
- means (150, 152) enabling non-condensible gases to be extracted periodically from said condensation enclosure (102).

8. A machine according to claim 7, **characterized by** the fact that said heat exchange wall (40) is a moving wall and it describes cyclical motion over a closed trajectory, the substance to be treated being deposited on said wall at the beginning of a cycle while the solid residue is removed at the end of the cycle.

9. A machine according to claim 8, **characterized by** the fact that it includes a series of identical moving walls (40) that are driven synchronously.

10. A machine according to claim 9, **characterized by** the fact that it includes a series of positive displacement pumps (51) each suitable for dispensing the substance to be applied on a corresponding one of the moving walls (40).

11. A machine according to any one of claims 8 to 10, **characterized by** the fact that said heat exchange wall is one of the walls of a hollow disk rotating about its axis with the inside volume thereof constituting said condensation enclosure while the volume outside the disk constitutes the evaporation enclosure.

12. A machine according to claim 11, **characterized by** the fact that it includes a series of parallel coaxial hollow disks (40) carried by a rotary tubular shaft (400) whose inside volume is in communicatin with the inside volume of each of the disks, said volumes together forming the condensation enclosure.

13. A machine according to claim 12, **characterized by** the fact that said tubular shaft (400) is disposed vertically and opens out at its base into a receptacle (401) receiving the liquid condensate.

14. A machine according to claim 7 or 8, **characterized by** the fact that the applicator device (5) comprises an oscillating arm (50).

15. A machine according to claims 11 and 14 taken in combination, **characterized by** the fact that the oscillating arm (50) caries a dispenser duct (52) for dispensing the substance which opens out close to said first face (41) of the disk (40) that forms the heat exchange wall, and that the end which opens out (53) oscillates in a plane parallel to said first face (41) in a direction that is approximately radial.

16. A machine according to claim 15, **characterized by** the fact that the oscillating arm (50) is driven by a cam mechanism (6) suitable for ensuring that the substance is applied at substantially constant thickness over the entire area of the disk (40).

17. A machine according to claims 12 and 14 taken in combination, **characterized by** the fact that each disk (40) is associated with an oscillating applicator arm (50) and that the set of said arms is driven by a common cam mechanism (6).

18. A machine according to any one of claims 8 to 17, **characterized by** the fact that it includes a fixed scraper member (7) pressing against said first face (41) of the moving wall (40).

19. A machine according to any one of claims 14 to 17, **characterized by** the fact that it includes a scraper member (7') carried by said oscillating arm (50').

20. A machine according to any one of claims 14 to 17, **characterized by** the fact that the oscillating arm (50, 50') is provided with a small brush (54, 54') that rubs against said first face (41) of the moving wall (40).

21. A machine according to any one of claims 8 to 20, **characterized by** the fact that the means suitable for encouraging the breaking up and the spreading out of the layer of substance consist of'a series of crushing rollers (72) pressing against the substance to be dried while it is being transferred on the moving wall (40).

22. An installation for implementing the method according to claim 2, **characterized by** the fact that it includes a machine (1) according to any one of claims 7 to 21, and that it is fitted with a heat exchanger (3) suitable for heating the substance that is input into the machine (1) by means of the hot liquid condensate leaving the machine.

23. An installation according to claim 22, for treatment of farm slurry, **characterized by** the fact that it includes a mechanical blender device (122) situated upstream form the heat exchanger (3), and a degassing and de-foaming device (123) situated downstream therefrom.

24. An installation according to claim 23, **characterized by** the fact that the degassing enclosure (310) of the degassing and de-foaming device (123) is in communication with said evaporation enclosure (101) via a duct (311).

## Patentansprüche

1. Verfahren zum Extrahieren fester Rückstände, welche sich in Suspension oder in Lösung in einer fließfähigen Materie befinden, die flüchtige Substanzen enthält, und insbesondere aus wässriger Materie, **dadurch gekennzeichnet, daß** man die Materie zusammenhängend und in der Form einer dünnen und regelmäßigen Schicht, deren Dicke zwischen 0,2 und 2 Millimetern liegt, auf der einen (41) - "erste Seite" genannt - von zwei Seiten einer thermischen Austauschwand (40) ausbreitet, wobei diese Wand auf eine Temperatur erwärmt wird, die ausreichend ist, um das schnelle Verdampfen des Wassers und/oder der flüchtigen Bestandteile der Materie vorzunehmen, daß man die Materieschicht auf dieser erste Seite (41) zerdrückt um sie zu nivellieren, was das Zerfallen und Auseinanderstreichen der Materieschicht begünstigt, daß man kontinuierlich die festen und trockenen Rückstände entfernt, im gleichen Maße, wie sie sich auf der ersten Seite (41) bilden, durch Abschaben der letzteren, und daß man die thermische Austauschwand (40) mit Hilfe des Dampfes erwärmt, der sich aus der Verdampfung ergibt, nachdem dieser Dampf mechanisch komprimiert worden ist, dann mit der anderen Seite (42) - "zweite Seite" genannt - der Wand (40) in Kontakt gebracht worden ist, derart, daß er sich daran niederschlägt, und daß man das flüssige und heiße Kondensat austrägt, wobei die nicht kondensierbaren Substanzen mittels einer physikalischchemischen Behandlung vor dem Nachverdichten des Dampfes entfernt werden.

2. Verfahren nach Anspruch 1, **dadurch gekennzeichnet, daß** vor ihrem Ausbreiten auf der thermischen Austauschwand die Materie durch das Kondensat vorgewärmt wird.

3. Verfahren nach einem der Ansprüche 1 oder 2, **dadurch gekennzeichnet, daß** die Materie Gülle aus der Zucht von Tieren oder Pflanzen ist.

4. Verfahren nach Anspruch 3, **dadurch gekennzeichnet, daß** die Gülle vor ihrem Ausbreiten einem Entschäumen und/oder einem Entgasen unterworfen wird.

5. Verfahren nach einem der Ansprüche 3 oder 4, **dadurch gekennzeichnet, daß** der Dampf, der sich auf der ersten Seite (41) der thermischen Austauschwand befindet, sich bei einem Druck von ungefähr 1 bar und auf einer Temperatur in der Größenordnung von 100°C befindet, während sich der Dampf auf der anderen Seite auf einem Druck von ungefähr 1,4 bar und auf einer Temperatur in der Größenordnung von 110°C befindet.

6. Verfahren nach einem der Ansprüche 1 bis 5, **dadurch gekennzeichnet, daß** man die Temperatur der Wand (40) erhöht, indem man die Überhitzungsenergie in der Zone, die dem Abschaben vorangeht, nutzt, um dort das Trocknen der festen Rückstände zu verbessern.

7. Maschine zum Extrahieren fester Rückstände, die sich in Suspension oder in Lösung in einer fließfähigen Materie befinden, welche flüchtige Substanzen enthält, und insbesondere aus einer wässrigen Materie, **dadurch gekennzeichnet, daß** sie aufweist:
- eine thermische Austauschwand (40), welche bei zwei Räumen (101, 102) den einen von dem anderen trennt, wobei der eine davon (101) - zum Verdampfen genannt - sich auf der ersten Seite (41) befindet, während der andere (102) - zum Kondensieren genannt - sich auf der zweiten Seite (42) befindet;
- eine Vorrichtung (5) zum Ausbreiten der zu behandelnden Materie in Form einer dünnen Schicht auf der ersten Seite (41) ;
- Einrichtungen (72), die in der Lage sind das Zerfallen und Anseinanderstreichen der Materieschicht auf dieser erste Seite (41) zu begünstigen ;
- Einrichtungen (2; 21, 8), die in der Lage sind: den Dampf, der in dem Verdampfungsraum (101) erzeugt wird, abzuziehen, wobei die nicht kondensierbaren Produkte mittels einer physikalischchemischen Behandlung beseitigt werden, ihn zu reinigen, ihn zu komprimieren und den komprimierten Dampf in den Kondensationsraum (102) einzuführen;
- Einrichtungen (7, 54), die dazu dienen, die festen und trockenen Rückstände zurückzugewinnen, die sich auf der ersten Seite (41) bilden;
- Einrichtungen (33) zum Austragen des flüssigen Kondensates, das sich in dem Kondensationsraum (102) bildet;
- Einrichtungen (150, 152), die es erlauben, aus dem Kondensationsraum (102) periodisch die nicht kondensierbaren Restgase herauszuziehen.

8. Maschine nach Anspruch 7, **dadurch gekennzeichnet, daß** die thermische Austauschwand (40) bewegbar ist und eine zyklische Bewegung mit geschlossener Trajektorie beschreibt, wobei die zu behandelnde Materie am Beginn des Zyklus auf dieser Wand abgelagert ist, während die festen Rückstände am Ende des Zyklus herausgenommen werden.

9. Maschine nach Anspruch 8, **dadurch gekennzeichnet, daß** sie eine Anzahl identischer bewegbarer Wände (40) aufweist, die synchron angetrieben werden.

10. Maschine nach Anspruch 9, **dadurch gekennzeichnet, daß** sie eine Anzahl Verdrängerpumpen (51) aufweist, von denen jede in der Lage ist, die auszubreitende Materie auf einer der bewegbaren Wände (40) zu verteilen.

11. Maschine nach einem der Ansprüche 8 bis 10, **dadurch gekennzeichnet, daß** die thermische Austauschwand eine der Wände einer Hohlscheibe ist, die sich um ihre Achse dreht und deren Innenraum den Kondensationsraum bildet, während der Raum außerhalb der Scheibe den Verdampfungsraum bildet.

12. Maschine nach Anspruch 11, **dadurch gekennzeichnet, daß** sie eine Anzahl koaxialer und paralleler Hohlscheiben (40) aufweist, welche von einer rohrförmigen Drehwelle (400) gehalten werden, deren Innenraum mit dem Innenraum jeder der Scheiben kommuniziert, wobei diese Räume den Kondensationsraum bilden.

13. Maschine nach Anspruch 12, **dadurch gekennzeichnet, daß** die rohrförmige Welle (400) vertikal angeordnet ist und mit ihrer Basis in einem Behälter (401) mündet, welcher das flüssige Kondensat aufnimmt.

14. Maschine nach einem der Ansprüche 7 oder 8, **dadurch gekennzeichnet, daß** die Ausbreitevorrichtung (5) einen Pendelarm (50) aufweist.

15. Maschine nach den Ansprüchen 11 und 14 in Kombination genommen, **dadurch gekennzeichnet, daß** der Pendelarm (50) eine Verteilerleitung (52) für die Materie trägt, die nahe der ersten Seite (41) der Scheibe (40) mündet, welche die thermische Austauschwand bildet, und daß das Mündungsende (53) sich in einer Ebene parallel zu dieser ersten Seite (41) hin- und herbewegt, wobei es einer ungefähr radialen Richtung folgt.

16. Maschine nach Anspruch 15, **dadurch gekennzeichnet, daß** der Pendelarm (50) durch einen Kurvenscheibenmechanismus (6) angetrieben wird, der eine Ausbreitdicke der Materie über die gesamte Oberfläche der Scheibe (40) sicherstellt, die im wesentlichen konstant ist.

17. Maschine nach den Ansprüchen 12 und 14 in Kombination genommen, **dadurch gekennzeichnet, daß** jeder Scheibe (40) ein Ausbreite-Pendelarm (50) zugeordnet ist und daß die Gesamtheit dieser Arme durch einen gemeinsamen Kurvenscheibenmechamismus (6) angetrieben wird.

18. Maschine nach einem der Ansprüche 8 bis 17, **dadurch gekennzeichnet, daß** sie ein festes Abstreiferelement (7) aufweist, das an der ersten Seite (41) der bewegbaren Wand (40) anliegt.

19. Maschine nach einem der Ansprüche 14 bis 17, **dadurch gekennzeichnet, daß** sie ein Abstreiferelement (7') aufweist, das von dem Pendelarm (50') gehalten wird.

20. Machine nach einem der Ansprüche 14 bis 17, **dadurch gekennzeichnet, daß** der Pendelarm (50, 50') mit einem kleinen Besen (54, 54') versehen ist, der an der ersten Seite (41) der bewegbaren Wand (40) reibt.

21. Maschine nach einem der Ansprüche 8 bis 20, **dadurch gekennzeichnet, daß** die Einrichtungen (72) , die das Zerfallen und das Auseinanderstreichen der Materieschicht begünstigen können, aus einer Anzahl Quetschwalzen (72) bestehen, die an der zu dehydrierenden Materie während ihrer Übertragung auf die bewegbare Wand (40) anliegen.

22. Anlage zum Durchführen des Verfahrens nach Anspruch 2, **dadurch gekennzeichnet, daß** sie eine Maschine (1) nach einem der Ansprüche 7 bis 21 aufweist und daß sie mit einem Wärmetauscher (3) ausgestattet ist, der die Materie, die in die Maschine (1) aus dem flüssigen und heißen Kondensat, das daraus austritt, eintritt, wiedererhitzen kann.

23. Anlage nach Anspruch 22, die zur Behandlung von Gülle aus der Zucht von Tieren oder Pflanzen dient, **dadurch gekennzeichnet, daß** sie eine Vorrichtung (122) zum mechanischen Mischen, die sich stromaufwärts des Wärmetauschers (3) befindet, und eine Entgasungs- und Entschäumungsvorrichtung (123), die sich stromabwärts des letzteren befindet, aufweist.

24. Anlage nach Anspruch 23, **dadurch gekennzeichnet, daß** der Entgasungsraum (310) der Entgasungs- und Entschäumungsvorrichtung (123) über eine Leitung (311) mit dem Verdampfungsraum (101) kommuniziert.
